# EUROPEAN PATENT APPLICATION

(11) **EP 3 932 244 A1**
(43) Date of publication of application: **05.01.2022**
(21) Application number: 20195944.2
(22) Date of filing: 14.09.2020
(51) Int. Cl.: A43B 23/08, B29C 43/14, B29D 35/14, C08J 5/04, A42C 2/00

(54) **METHOD FOR PREPARING A THREE-DIMENSIONAL SHAPED ARTICLE**

(30) Priority: 01.07.2020 CN 202010618172
(71) Applicant: Covestro Deutschland AG, 51373 Leverkusen (DE)
(72) Inventor: CAO, Kai, Shangai 201206 (CN); XIANG, Jinbao, Shangai 201206 (CN); QI, Guidong, Shangai 201314 (CN)
(74) Representative: Levpat

(57) **Abstract**

The present invention relates to a method for preparing a three-dimensional shaped article, comprising the following steps: a) unfolding the three-dimensional profile of the three-dimensional shaped article with a curved surface via a computer-aided design software; b) dividing the unfolded three-dimensional profile obtained in step a) into several elemental layers via the computer-aided design software; c) cutting a continuous fiber reinforced thermoplastic resin based composite sheet to have the same or similar shape and size with the elemental layers; d) stacking the cut composite sheets in order of size to obtain a stack; and g) forming the stack obtained in step d), followed by demoulding and optionally trimming to obtain the three-dimensional shaped article. With the method of the present invention, a continuous fiber reinforced thermoplastic resin based composite sheet can be processed into a three-dimensional shaped article with uneven thickness and a high degree of curvature. The resulting three-dimensional shaped article features a light weight, good impact resistance and compression resistance.

## Description

### TECHNICAL FIELD

The present invention belongs to the field of article processing. In particular, the present invention relates to a method for preparing a three-dimensional shaped article.

### BACKGROUND ART

As the nation pays more attention to safety in production and people's awareness of safety in production improves, safety shoes are increasingly used in production scenes. Safety shoes protect workers from foreseeable injuries to their feet and legs since the safety shoes have high-strength and impact-resistant toecaps that can effectively protect the feet from external crash or impact. Obviously, toecaps are core parts of safety shoes. A high-quality toecap not only ensures wearing comfort, but also satisfies mechanical strength requirements.

The national standard GB21148, the American standard ASTM F2413, and the European standard EN 12568 have elaborated on impact resistance, compression resistance, and environmental testing of safety shoe toecaps. For example, the European standard EN 12568 stipulates that when a safety shoe toecap is subjected to impact of 200J and compression of 15,000N, the minimum space in the toecap should meet certain requirements .

Due to the stringent regulations on impact resistance, pressure resistance and environmental testing of safety shoe toecaps in various countries, not all materials are suitable for safety shoe toecaps. To meet the standards of safety shoe toecaps in various countries, currently most of the safety shoe toecaps are made of metal materials. However, metal toecaps are heavy, difficult to wear and uncomfortable, and metal materials are prone to corrosion and not well combined with the instep layer, and may trigger an alarm of security inspection equipment when one passes through security screening. These drawbacks all limit the use of metal materials. Resin based composites, which combine low-density resin with high-strength fibers, have a light weight while ensuring strength, and will not set off an alarm from security inspection equipment. Meanwhile, they have excellent chemical resistance properties, and can be well combined with the instep layer. Therefore, resin based composites have become a preferred material for the preparation of safety shoe toecaps. The resin based composites are classified into thermoset composites and thermoplastic composites.

The safety shoes have a complex three-dimensional geometric shape, and their processing process is also quite complicated.

CN2742806Y discloses a toecap made of a thermoset composite. The molding process of the thermoset composition involves a relatively long curing stage, which dramatically decreases production efficiency, and some toxic and harmful gases volatilized in the curing process aggravate the environment and at the same time make it difficult to recycle the thermoset composite.

CN1136798C discloses a toecap made of a composite which is prepared by using a long fiber reinforced thermoplastic resin. The reinforcement fibers have an average fiber length of from 10 mm to 50 mm, and a non-directional distribution, and a content by volume of the reinforcement fibers is from 40% to 60%.

CN114739C discloses a composite of a "sandwich structure" formed by a combination of long fiber reinforced thermoplastic resin layers and a continuous fiber reinforced thermoplastic resin layer, and a safety shoe toecap manufactured using the composite. The material has excellent molding properties, and the toecap made therefrom features a light weight, high strength and high compressive strength. The fiber reinforced thermoplastic resin based composite includes a core layer and surface layers, wherein the core layer is a textile fabric or woven web or unidirectional fiber reinforced thermoplastic resin layer (a continuous fiber reinforced thermoplastic resin layer), and the surface layers are fiber reinforced thermoplastic resin layers wherein the fibers is in a random form (long fiber reinforced thermoplastic resin layers). The composite of this structure is formed in a three-dimensional mold by hot stamping or high-speed compression molding technology, and the resulting molded product is free of wrinkles or folds, with uniform strength in all directions.

CN103478988A discloses a safety protection device with a special composite structure. The safety protection device is obtained by compounding and hot pressing a prefabricated product formed by overlaying multiple layers, wherein the prefabricated product comprises at least four substrate layers and at least one reinforced layer; each substrate layer is semicircular or quasi-semicircular or T-shaped or quasi-T-shaped; the substrate layer has a radial cutting hole when it is semicircular or quasi-semicircular; the substrate layers at least comprise two structural forms; the areas of the substrate layers decrease gradually according to the overlaying sequence; the area of each reinforced layer is smaller than that of the smallest substrate layer; the reinforced layers are positioned between adjacent substrate layers or on the surface of the prefabricated product; the substrate layer or the reinforced layer is obtained by uniformly coating a thermoset resin material on continuous fibers or a fiber fabric.

The continuous fiber reinforced thermoplastic resin based composites have the advantages of high strength, high modulus, good impact resistance, and low density, so their specific strength and specific modulus are very high. Moreover, the composites also have the advantages of good chemical resistance, high processing efficiency, and recyclability. If continuous fiber reinforced thermoplastic resin based composites are used alone to form and process safety shoe toecaps, they not only can improve strength and impact resistance of toecaps, but also can reduce thickness and weight of toecaps as well as improve production efficiency. However, there is no report regarding a method for processing and manufacturing toecaps with continuous fiber reinforced thermoplastic resin based composites alone. On the one hand, this is because continuous fiber reinforced thermoplastic resin based composites have poor flowability under high-temperature and high-pressure processing conditions, and cannot be easily formed. On the other hand, this is because the toecaps *per se* are uneven in thickness and require deep processing of the curved surface. Therefore, it is still technically challenging to process safety shoe toecaps with uneven thickness and a high degree of curvature with the continuous fiber reinforced thermoplastic resin based composites alone.

Therefore, there is a need in the art for a three-dimensional shaped article such as a safety shoe toecap prepared by using a continuous fiber reinforced thermoplastic resin based composite, and a method for preparing the same.

### SUMMARY OF THE INVENTION

One objective of the present invention is to provide a method for preparing a three-dimensional shaped article by using a continuous fiber reinforced thermoplastic resin based composite.

Another objective of the present invention is to provide a three-dimensional shaped article prepared from a continuous fiber reinforced thermoplastic resin based composite.

Thus, according to a first aspect, the present invention provides a method for preparing a three-dimensional shaped article, comprising the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
e) optionally, pre-laminating the stack obtained in step d) to obtain a pre-laminate;
f) optionally, pre-forming the stack obtained in step d) or the pre-laminate obtained in step e) into a semi-product; and
g) forming the stack obtained in step d), the pre-laminate obtained in step e) or the semi-product obtained in step f), followed by demoulding and optionally trimming to obtain the three-dimensional shaped article.

According to a second aspect, the present invention provides a three-dimensional shaped article prepared by the above method.

With the method of the present invention, a continuous fiber reinforced thermoplastic resin based composite sheet can be processed into a three-dimensional shaped article with uneven thickness and a high degree of curvature. The resulting three-dimensional shaped article features a light weight, good impact resistance and compression resistance.

### BRIEF DESCRIPTION OF THE DRAWINGS

The present invention will be illustrated in detail in conjunction with the drawings hereinafter, in which:
FIG. 1 schematically shows a computer-aided design process according to an embodiment of the present invention.
FIG. 2 schematically shows an overlay structure design of the composite sheet used for the three-dimensional article according to an embodiment of the present invention.
FIG. 3 schematically shows a part of the process for preparing a three-dimensional article according to an embodiment of the present invention.

### DETAILED DESCRIPTION OF THE INVENTION

Some embodiments of the present invention will be elaborated in conjugation with the drawings for the purpose of illustration.

According to the first aspect, the present invention provides a method for preparing a three-dimensional shaped article, comprising the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
e) optionally, pre-laminating the stack obtained in step d) to obtain a pre-laminate;
f) optionally, pre-forming the stack obtained in step d) or the pre-laminate obtained in step e) into a semi-product; and
g) forming the stack obtained in step d), the pre-laminate obtained in step e) or the semi-product obtained in step f), followed by demoulding and optionally trimming to obtain the three-dimensional shaped article.

In some embodiments, the method does not comprise steps e) and f).

Thus, in some embodiments, the method comprises the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack; and
g) forming the stack obtained in step d), followed by demoulding and optionally trimming to obtain the three-dimensional shaped article.

In some embodiments, the method comprises step e), but does not comprise step f).

Thus, in some embodiments, the method comprises the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
e) pre-laminating the stack obtained in step d) to obtain a pre-laminate; and
g) forming the pre-laminate obtained in step e), followed by demoulding and optionally trimming to obtain the three-dimensional shaped article.

In some embodiments, the method comprises step f), but does not comprise step e).

Thus, in some embodiments, the method comprises the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
f) pre-forming the stack obtained in step d) into a semi-product; and
g) forming the semi-product obtained in step f), followed by demoulding and optionally trimming to obtain the three-dimensional shaped article.

In some embodiments, the method comprises steps e) and f).

Thus, in some embodiments, the method comprises the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
e) pre-laminating the stack obtained in step d) to obtain a pre-laminate;
f) pre-forming the pre-laminate obtained in step e) into a semi-product; and
g) forming the semi-product obtained in step f), followed by demoulding and optionally trimming to obtain the three-dimensional shaped article.

A person skilled in the art can determine a shape and a size similar to those of the elemental layers to minimize shortage or overflow of materials.

For the purpose of the present invention, a three-dimensional profile of a three-dimensional shaped article with a curved surface is unfolded via step a) to form a three-dimensional profile without a curved surface.

In step b), the computer-aided design software determines the number, thickness, shape and size of each elemental layer according to the three-dimensional profile unfolded in step a).

Specifically, in step b), the computer-aided design software selects the thickness of the composite sheet to be used, based on the maximum and minimum thickness of the three-dimensional profile unfolded in step a) and the thickness of the available composite sheet. The selected thickness of the composite sheet serves as the dividing thickness, on the basis of which the unfolded three-dimensional profile in step a) is divided to obtain the number, thickness, shape and size of each elemental layer.

In the present application, the elemental layers refer to structural layers for achieving the maximum and minimum thickness of the unfolded three-dimensional profile. Each elemental layer can have the same or different thickness.

For example, when the unfolded three-dimensional profile has the maximum thickness of 8 mm and the minimum thickness of 4 mm, it can be divided into 8 elemental layers with the thickness of 1 mm, or 4 elemental layers with the thickness of 2 mm, or 4 elemental layers with the thickness of 1 mm and 2 elemental layers with the thickness of 2 mm.

The thickness of the available continuous fiber reinforced thermoplastic resin based composite sheet can be input as a parameter into the computer-aided design software, whereby suitable combinations of elemental layers are designed based on the thickness of the composite sheet input, and the maximum and minimum thickness of the three-dimensional profile.

Moreover, in step b), the computer-aided design software determines the shape and size of each elemental layer, according to the unfolded three-dimensional profile in step a).

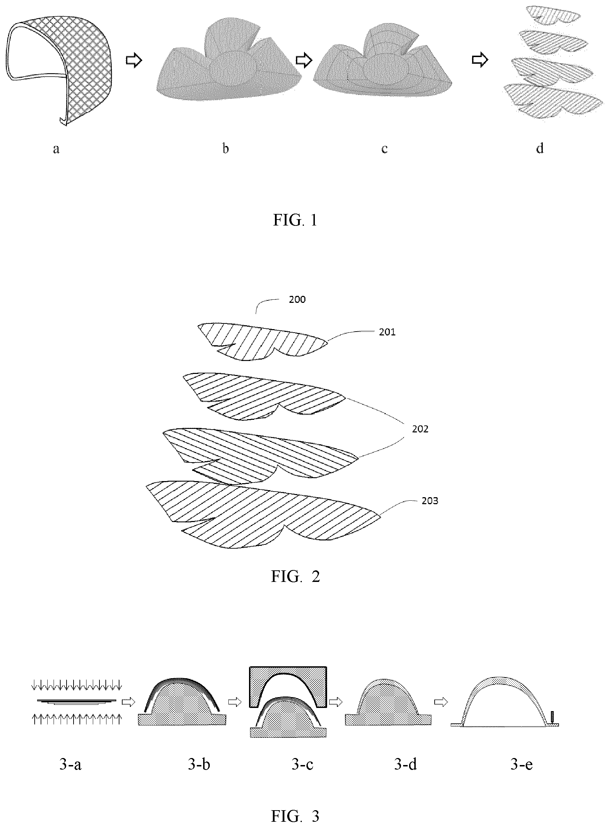

The following is an exemplary illustration of steps a) and b) of the method according to the present invention by reference to FIG. 1 with a toecap as an example.

First, the three-dimensional profile of the toecap as illustrated in FIG. 1-a is unfolded into the three-dimensional profile as illustrated in FIG. 1-b via a computer-aided design software. Then, the three-dimensional profile as illustrated in FIG. 1-b is divided into several elemental layers as illustrated in FIG. 1-c based on the maximum and minimum thickness of the unfolded three-dimensional profile and the thickness of an available composite sheet. Finally, the elemental layers are optimized to have the shape and size as illustrated in FIG. 1-d.

For example, when the unfolded three-dimensional profile of the toecap has the maximum thickness of 8 mm and the minimum thickness of 4 mm, and the available composite sheet has the thickness of 1.025 mm, the unfolded toecap can be divided into 8 elemental layers, each having a thickness of 1.025 mm.

For example, when the unfolded three-dimensional profile of the toecap has the maximum thickness of 8 mm and the minimum thickness of 2.5 mm, and the available composite sheets have the thickness of 1.23 mm and 1.025 mm, the unfolded toecap can be divided into 7 elemental layers, each having a thickness of 1.23 mm or 1.025 mm.

For example, when the unfolded three-dimensional profile of the toecap has the maximum thickness of 8 mm and the minimum thickness of 2.5 mm, and the available composite sheets have the thickness of 1.025 mm and 0.25 mm, the unfolded toecap can be divided into 10 elemental layers, each having a thickness of 1.025 mm or 0.25 mm.

For example, when the unfolded three-dimensional profile of the toecap has the maximum thickness of 8 mm and the minimum thickness of 2.5 mm, and the available composite sheets have the thickness of 1.05 mm and 1.225 mm, the unfolded toecap can be divided into 7 elemental layers, each having a thickness of 1.05 mm or 1.225 mm.

The above designs are only provided as examples.

The computer-aided design software may be, for example, FiberSIM, ESAComp, SYSPLY, ProE or Catia.

The computer-aided design software can unfold a product in a specific direction based on the input configuration information of the product.

The computer-aided design software can divide the unfolded three-dimensional profile in the thickness direction, based on the selected dividing thickness, to obtain the number, thickness, shape and size of each elemental layer.

In step c), a continuous fiber reinforced thermoplastic resin based composite sheet having the corresponding thickness is cut to have the corresponding shape, based on the thickness, shape and size of the elemental layers determined in step b).

The continuous fiber reinforced thermoplastic resin based composite sheet having the corresponding thickness can be either purchased or self-prepared.

In step d), according to the unfolded three-dimensional profile in step a), the cut composite sheets are stacked in line with the elemental layers having the corresponding shape and size to obtain a stack.

In optional step e), pre-laminating is carried out under heating and pressure.

The pre-laminating temperature is determined based on the resin used in the continuous fiber reinforced thermoplastic resin based composite sheet.

In some embodiments, the resin used is a polycarbonate resin, the pre-laminating is carried out at a temperature ranging from 180°C to 250°C.

Preferably, the heating method for the pre-laminating comprises infrared heating, hot air heating, electromagnetic heating, water heating, steam heating, oil heating or electric heating.

The pre-laminating pressure can be set based on the resin used.

In some embodiments, the resin used is a polycarbonate resin, the pre-laminating is carried out at a pressure ranging from 5 bar to 50 bar.

In the case of pre-laminating, the pre-laminate is usually cooled after the pre-laminating, so that it can enter the subsequent processing step.

In optional step f), pre-forming is preferably carried out under heating and pressure.

The pre-forming can be performed manually or automatically.

In some embodiments, the stack is manually pre-formed after heating.

In the case of manual pre-forming, the stack can be heated by a heating method known in the art such as using an infrared lamp or an oven.

In the case of manual pre-forming, a person skilled in the art can apply certain pressure to pre-form based on the hardness of the heated stack.

In some embodiments, a press is used for pre-forming.

In step g), forming is preferably carried out under heating and pressure.

Preferably, the heating method for the forming may comprise infrared heating, hot air heating, electromagnetic heating, water heating, steam heating, oil heating or electric heating.

The forming temperature is determined based on the resin used in the continuous fiber reinforced thermoplastic resin based composite sheet.

In some embodiments, the resin used is a polycarbonate resin, forming is carried out at a temperature ranging from 180°C to 250°C.

The forming pressure can be set based on the resin used. Generally, forming is carried out at a pressure ranging from 50 bar to 200 bar.

In some embodiments, the resin used is a polycarbonate resin, forming is carried out at a pressure ranging from 50 bar to 150 bar.

In step g), the forming time may range from 5 to 300 s.

In step g), forming is followed by cooling, demoulding and optional trimming.

Cooling can be performed in a manner known in the art, such as water cooling, oil cooling, and the like.

Preferably, after forming, the temperature is decreased to a level below the Vicat softening temperature of the resin used.

Cutting can be performed by a means known in the art, such as water cutting, computer numerical control (CNC) machine tool cutting, die cutting, or laser cutting.

The continuous fiber reinforced thermoplastic resin based composite sheet may be monolayer unidirectional fiber reinforced thermoplastic resin based prepreg tapes or woven web reinforced thermoplastic resin based prepreg tapes.

The continuous fiber reinforced thermoplastic resin based composite sheet may also be a laminate of two or more layers, each layer independently selected from unidirectional fiber reinforced thermoplastic resin based prepreg tapes or woven web reinforced thermoplastic resin based prepreg tapes.

Preferably, the fiber is selected from the group consisting of glass fiber, carbon fiber and aramid fiber.

Preferably, the woven web is selected from a web woven from glass fiber, carbon fiber or aramid fiber.

Preferably, the thermoplastic resin is selected from the group consisting of polypropylene (PP), polyoxymethylene (POM), polyamide (PA), polycarbonate (PC), polyurethane (PU) and a polycarbonate blend.

Examples of the polycarbonate blend include a blend of polycarbonate and acrylonitrile-butadiene-styrene (PC/ABS), a blend of polycarbonate and polyethylene terephthalate (PC/PET), and a blend of polycarbonate and polybutylene terephthalate (PC/PBT).

As for unidirectional fiber reinforced thermoplastic resin based prepreg tapes, they can be overlaid at any angle within 0-90 degrees, preferably 0 degree, 45 degrees, or 90 degrees.

The continuous fiber reinforced thermoplastic resin based composite sheet can either be self-prepared or purchased.

Some embodiments of the method according to the present invention will be further described below by reference to FIG. 1-3 with a safety shoe toecap as an example of the three-dimensional article.

In some embodiments, the present invention provides a method for preparing a three-dimensional shaped article which is a safety shoe toecap, said method comprising the following steps:
a) unfolding the three-dimensional profile of the safety shoe toecap via a computer-aided design software (FIG. 1-a and FIG. 1-b);
b) dividing the unfolded three-dimensional profile obtained in step a) into several elemental layers via the computer-aided design software, each elemental layer individually having a certain thickness, shape and size (FIG. 1-c and FIG. 1-d);
c) cutting a continuous fiber reinforced thermoplastic resin based composite sheet to have the corresponding shape and size based on the shape and size of the elemental layers obtained in step b);
d) stacking the cut composite sheets in order of size to obtain a stack (FIG. 2);
f) pre-forming the stack obtained in step d) into a semi-product (FIG. 3-a and FIG. 3-b); and
g) forming the semi-product obtained in step f) to have a toecap shape (FIG. 3-c), followed by cooling and demoulding (FIG. 3-d) and optionally trimming (FIG. 3-e) to obtain the safety shoe toecap.

As illustrated in FIG. 1, in step b), the unfolded three-dimensional profile obtained in step a) is divided into several elemental layers including an upper layer, an intermediate layer, and a lower layer via the computer-aided design software.

The upper layer may include one or more elemental layers.

The intermediate layer may include one or more elemental layers.

The lower layer may include one or more elemental layers.

It should be understood that each elemental layer has individual thickness, shape, and size.

Preferably, the total thickness of the lower layer is the same as the minimum thickness of the unfolded three-dimensional profile.

Preferably, the total thickness of the upper layer, the intermediate layer and the lower layer is the same as the maximum thickness of the unfolded three-dimensional profile.

Preferably, the upper layer, the intermediate layer and the lower layer are arranged according to the unfolded three-dimensional profile.

Preferably, the shape and size of the upper layer are the same as those of the area of the unfolded three-dimensional profile with the maximum thickness.

Preferably, the shape and size of the lower layer are the same as those of the top view of the unfolded three-dimensional profile.

Preferably, the shape and size of the intermediate layer fall between those of the upper layer and those of the lower layer.

According to the second aspect, the present invention provides a three-dimensional shaped article prepared by the above method.

The three-dimensional shaped article may be an article having a three-dimensional shape that can be prepared by using a continuous fiber reinforced thermoplastic resin based composite sheet.

For example, the three-dimensional shaped article may be toecaps, helmets, knee caps, curved panels, or curved blades and the like.

More specifically, the toecap may be a safety shoe toecap.

The descriptions of each feature in this application can be combined with each other without contradicting each other, and the technical solutions obtained thereby fall within the scope as claimed in this application.

The terms "comprising" and "including" described in the present application cover the circumstances which further comprise or include other elements not specifically mentioned and the circumstances consisting of the elements mentioned.

Unless otherwise defined, all technical and scientific terms used herein have the same meaning as commonly understood by a person skilled in the field the present invention belongs to. When the definition of a term in the present description conflicts with the meaning as commonly understood by a person skilled in the field the present invention belongs to, the definition described herein shall apply.

Unless otherwise specified, all numerical values expressing thickness, size, processing conditions and the like used in the description and claims are to be understood as being modified by the term "about". Accordingly, unless indicated to the contrary, the numerical values and parameters described herein are approximate values which are capable of being changed based on the desired performance obtained as required.

### Examples

The concept and resulted technical effects of the present invention will be further illustrated below in conjunction with the Examples and drawings so that a person skilled in the art can fully understand the objectives, features and effects of the present invention. It shall be understood that the Examples herein are for illustrative purposes only and the scope of the present invention is not limited thereto.

### Raw materials used:

Prepreg tapes I: unidirectional continuous carbon fiber reinforced polycarbonate prepreg tapes with a thickness of 0.175 mm and a carbon fiber content by volume of 44%.
Prepreg tapes II: unidirectional continuous glass fiber reinforced polycarbonate prepreg tapes with a thickness of 0.205 mm and a glass fiber content by volume of 44%.
Prepreg tapes III: glass fiber woven fabric reinforced polycarbonate prepreg tapes with a thickness of 0.25 mm and a glass fiber content by weight of 55%.

### Equipment used:

Ceramic infrared heating oven from Nanjing Heyang Company.

Waterjet cutting machine: ProtoMax type from OMAX Company.

100-ton static flat vulcanizing machine: BL-6170-B-50T type from BOLON Company.

100-ton vertical press: THP32-100W type from Tianduan Company.

Rapid cooling and heating equipment: Single ATT H2-200-48 type from SINGLE Company.

CNC machine tool: 60S type from Saiwei Company.

### Mold used:

Hot-pressing mold for toecap: equipped with high-pressure hot water heating pipelines and cold water cooling pipelines.

### Testing method:

Impact and compression resistance tests were carried out in accordance with ASTM F2413 and EN 12568S.

### Example 1: Preparation of a safety shoe toecap having a 3D curved surface structure with thicknesses ranging from 4 to 8 mm

### I. Preparation of a continuous fiber reinforced thermoplastic resin based composite sheet

Unidirectional continuous glass fiber reinforced polycarbonate prepreg tapes (prepreg tapes II) overlaid in the manner of 0/90/0/90/0 on a 100-ton static flat vulcanizing machine were pressed into a composite sheet with a thickness of 1.025 mm at the pressuring temperature of 240 °C, the pressing pressure of 10 bar, the pressing time of 5 min, and the cooling temperature of 50 °C.

### II. Preparation of a safety shoe toecap

Preparation of the safety shoe toecap is illustrated as follows by reference to FIGs. 1-3.

Referring to FIG. 1, the three-dimensional profile of the toecap (US size: 8) was unfolded via the FiberSIM software.

Referring to FIG. 1, the unfolded three-dimensional profile was divided into 8 elemental layers via the FiberSIM software, based on the maximum thickness and minimum thickness (the maximum thickness of the toecap was 8 mm and the minimum thickness was 4 mm) of the unfolded three-dimensional profile. Among them, 2 elemental layers having a thickness of 1.025 mm constituted an upper layer, 2 elemental layers having a thickness of 1.025 mm constituted an intermediate layer, and 4 elemental layers having a thickness of 1.025 mm constituted a lower layer.

Referring to FIG. 2, the composite sheet having a thickness of 1.025 mm was cut by a water cutting machine to obtain 2 composite sheets (201) having the similar shape and size with the area of the toecap having the maximum thickness (8 mm), 4 composite sheets (203) having the similar shape and size with the top view of the unfolded three-dimensional profile, and 2 composite sheets (202) having the shape and size falling between those of the area having the maximum thickness and those of the top view of the unfolded three-dimensional profile, and scaling down in descending order.

Referring to FIG. 2, the 8 cut composite sheets were stacked from large to small to obtain a stack (200).

Referring to FIG. 3, the stack was preheated (FIG.3-a) by a ceramic infrared heating oven to 240 °C, and then preformed manually to obtain a semi-finished product (FIG.3-b).

Referring to FIG. 3, the semi-finished product was placed in a toecap mold where it was formed by hot-pressing, cooled and demoulded by a 100-ton vertical press and rapid cooling and heating equipment, wherein the hot-pressing temperature was 240 °C, the hot-pressing pressure was 120 bar, the hot pressing time was 30s, and the cooling temperature was 80 °C. The heating was carried out using high-pressure hot water, and the cooling was carried out using high-pressure cold water. Finally, the formed toecap was trimmed by a CNC machine tool to obtain the toecap.

### III. Impact test on the safety shoe toecap

The impact resistance test was performed on the prepared safety shoe toecap with the impact energy of 102 J according to ASTM F2413. The test results were shown in Table 1.

### Comparative Example 1: Preparation of a safety shoe toecap having a 3D curved surface structure with thicknesses ranging from 4 to 8 mm

### I. Preparation of a continuous fiber reinforced thermoplastic resin based composite sheet

Unidirectional continuous glass fiber reinforced polycarbonate prepreg tapes (prepreg tapes II) overlaid in the manner of 0/90/0/90/0 on a 100-ton static flat vulcanizing machine were pressed into a composite sheet with a thickness of 1.025 mm at the pressuring temperature of 240 °C, the pressing pressure of 10 bar, the pressing time of 5 min, and the cooling temperature of 50 °C.

### II. Preparation of a safety shoe toecap

The safety shoe toecap was prepared by reference to Example 1, but the computer-aided design was not used in this comparative example. Instead, 5 layers of the composite sheet having a thickness of 1.025 mm were cut to have the same shape and size with the unfolded profile of the toecap, and the toecap forming results were shown in Table 1.

### III. Impact test on the safety shoe toecap

The impact resistance test was performed on the prepared safety shoe toecap with the impact energy of 102 J according to ASTM F2413. The test results were shown in Table 1.

### Example 2: Preparation of a safety shoe toecap having a 3D curved surface structure with thicknesses ranging from 2.5 to 8 mm

### I. Preparation of a continuous fiber reinforced thermoplastic resin based composite sheet

Unidirectional continuous glass fiber reinforced polycarbonate prepreg tapes (prepreg tapes II) overlaid in the manner of 0/90/0/0/90/0 and 0/90/0/90/0 on a 100-ton static flat vulcanizing machine were pressed into a composite sheet with a thickness of 1.23 mm and a composite sheet with a thickness of 1.025 mm at the pressuring temperature of 240 °C, the pressing pressure of 10 bar, the pressing time of 5 min, and the cooling temperature of 50 °C.

### II. Preparation of a safety shoe toecap

Preparation of the safety shoe toecap is illustrated as follows by reference to FIGs. 1-3.

Referring to FIG. 1, the three-dimensional profile of the toecap (US size: 8) was unfolded via the FiberSIM software.

Referring to FIG. 1, the unfolded three-dimensional profile was divided into 7 elemental layers via the FiberSIM software, based on the maximum thickness and minimum thickness (the maximum thickness of the toecap was 8 mm and the minimum thickness was 2.5 mm) of the unfolded three-dimensional profile. Among them, 2 elemental layers having a thickness of 1.23 mm constituted an upper layer, 3 elemental layers having a thickness of 1.025 mm constituted an intermediate layer, and 2 elemental layers having a thickness of 1.23 mm constituted a lower layer.

Referring to FIG. 2, the composite sheet having a thickness of 1.23 mm was cut by a water cutting machine to obtain 2 composite sheets (201) having the similar shape and size with the area of the toecap having the maximum thickness (8 mm), and 2 composite sheets (203) having the similar shape and size with the top view of the unfolded three-dimensional profile. Moreover, the composite sheet having a thickness of 1.025 mm was cut to obtain 3 composite sheets (202) having the shape and size falling between those of the area having the maximum thickness and those of the top view of the unfolded three-dimensional profile, and scaling down in descending order.

Referring to FIG. 2, the 7 cut composite sheets were stacked from large to small to obtain a stack (200).

Referring to FIG. 3, the stack was preheated (FIG. 3-a) by a ceramic infrared heating oven to 240°C, and then preformed manually to obtain a semi-finished product (FIG. 3-b). Referring to FIG. 3, the semi-finished product was placed in a toecap mold where it was formed by hot-pressing, cooled and demoulded by a 100-ton vertical press and rapid cooling and heating equipment, wherein the hot-pressing temperature was 240 °C, the hot-pressing pressure was 120 bar, the hot pressing time was 30s, and the cooling temperature was 80 °C. The heating was carried out using high-pressure hot water, and the cooling was carried out using high-pressure cold water. Finally, the formed toecap was trimmed by a CNC machine tool to obtain the toecap.

### III. Impact test on the safety shoe toecap

The impact resistance test was performed on the prepared safety shoe toecap with the impact energy of 200 J according to EN12568S. The test results were shown in Table 1.

### Comparative Example 2: Preparation of a safety shoe toecap having a 3D curved surface structure with thicknesses ranging from 2.5 to 8 mm

### I. Preparation of a continuous fiber reinforced thermoplastic resin based composite sheet

Unidirectional continuous glass fiber reinforced polycarbonate prepreg tapes (prepreg tapes II) overlaid in the manner of 0/90/0/90/0 on a 100-ton static flat vulcanizing machine were pressed into a composite sheet with a thickness of 1.025 mm at the pressuring temperature of 240 °C, the pressing pressure of 10 bar, the pressing time of 5 min, and the cooling temperature of 50 °C.

### II. Preparation of a safety shoe toecap

The safety shoe toecap was prepared by reference to Example 2, but the computer-aided design was not used in this comparative example. Instead, 5 layers of the composite sheet having a thickness of 1.025 mm were cut to have the same shape and size with the unfolded profile of the toecap, and the toecap forming results were shown in Table 1.

### III. Impact test on the safety shoe toecap

The impact resistance test was performed on the prepared safety shoe toecap with the impact energy of 200 J according to EN12568S. The test results were shown in Table 1.

### Example 3: Preparation of a safety shoe toecap having a 3D curved surface structure with thicknesses ranging from 2.5 to 8 mm

### I. Preparation of a continuous fiber reinforced thermoplastic resin based composite sheet

Unidirectional continuous carbon fiber reinforced polycarbonate prepreg tapes (prepreg tapes I) overlaid in the manner of 0/90/0/0/90/0 and 0/90/0/90/0/90/0 on a 100-ton static flat vulcanizing machine were pressed into a composite sheet with a thickness of 1.05 mm and a composite sheet with a thickness of 1.225 mm at the pressuring temperature of 220 °C, the pressing pressure of 20 bar, the pressing time of 3 min, and the cooling temperature of 40 °C.

### II. Preparation of a safety shoe toecap

Preparation of the safety shoe toecap is illustarated as follows by reference to FIGs. 1-3.

Referring to FIG. 1, the three-dimensional profile of the toecap (US size: 8) was unfolded via the FiberSIM software.

Referring to FIG. 1, the unfolded three-dimensional profile was divided into 7 elemental layers via the FiberSIM software, based on the maximum thickness and minimum thickness (the maximum thickness of the toecap was 8 mm and the minimum thickness was 2.5 mm) of the unfolded three-dimensional profile. Among them, 2 elemental layers having a thickness of 1.225 mm constituted an upper layer, 3 elemental layers having a thickness of 1.05 mm constituted an intermediate layer, and 2 elemental layers having a thickness of 1.225 mm constituted a lower layer.

Referring to FIG. 2, the composite sheet having a thickness of 1.225 mm was cut by a water cutting machine to obtain 2 composite sheets (201) having the similar shape and size with the area of the toecap having the maximum thickness (8 mm), and 2 composite sheets (203) having the similar shape and size with the top view of the unfolded three-dimensional profile. Moreover, the composite sheet having a thickness of 1.05 mm was cut by the water cutting machine to obtain 3 composite sheets (202) having the shape and size falling between those of the area having the maximum thickness and those of the top view of the unfolded three-dimensional profile, and scaling down in descending order.

Referring to FIG. 2, the 7 cut composite sheets were stacked from large to small to obtain a stack (200).

Referring to FIG. 3, the stack was preheated (FIG. 3-a) by a ceramic infrared heating oven to 230°C, and then preformed manually to obtain a semi-finished product (FIG. 3-b).

Referring to FIG. 3, the semi-finished product was placed in a toecap mold where it was formed by hot-pressing, cooled and demoulded by a 100-ton vertical press and rapid cooling and heating equipment, wherein the hot-pressing temperature was 230 °C, the hot-pressing pressure was 150 bar, the hot pressing time was 60 s, and the cooling temperature was 70 °C. The heating was carried out using high-pressure hot water, and the cooling was carried out using high-pressure cold water. Finally, the formed toecap was trimmed by a CNC machine tool to obtain the toecap.

### III. Impact test on the safety shoe toecap

The impact resistance test was performed on the prepared safety shoe toecap with the impact energy of 200 J according to European Standard EN12568S. The test results were shown in Table 1.

### Comparative Example 3: Preparation of a safety shoe toecap having a 3D curved surface structure with thicknesses ranging from 2.5 to 8 mm

### I. Preparation of a continuous fiber reinforced thermoplastic resin based composite sheet

Unidirectional continuous carbon fiber reinforced polycarbonate prepreg tapes (prepreg tapes I) overlaid in the manner of 0/90/0/0/90/0 on a 100-ton static flat vulcanizing machine were pressed into a composite sheet with a thickness of 1.05 mm at the pressuring temperature of 220 °C, the pressing pressure of 20 bar, the pressing time of 3 min, and the cooling temperature of 40 °C.

### II. Preparation of a safety shoe toecap

The safety shoe toecap was prepared by reference to Example 3, but the computer-aided design was not used in this comparative example. Instead, 5 layers of the composite sheet having a thickness of 1.05 mm were cut to have the same shape and size with the unfolded profile of the toecap, and the toecap forming results were shown in Table 1.

### III. Impact test on the safety shoe toecap

The impact resistance test was performed on the prepared safety shoe toecap with the impact energy of 200 J according to European Standard EN12568S. The test results were shown in Table 1.

### Example 4: Preparation of a safety shoe toecap having a 3D curved surface structure with thicknesses ranging from 2.5 to 8 mm

### I. Preparation of a continuous fiber reinforced thermoplastic resin based composite sheet

Unidirectional continuous glass fiber reinforced polycarbonate prepreg tapes (prepreg tapes II) overlaid in the manner of 0/90/0/90/0 on a 100-ton static flat vulcanizing machine were pressed into a composite sheet with a thickness of 1.025 mm at the pressuring temperature of 240 °C, the pressing pressure of 10 bar, the pressing time of 5 min, and the cooling temperature of 50 °C.

Meanwhile, glass fiber woven fabric reinforced polycarbonate prepreg tapes (prepreg tapes III) with a thickness of 0.25 mm were prepared for later use.

### II. Preparation of a safety shoe toecap

Preparation of the safety shoe toecap is illustrated as follows by reference to FIGs. 1-3.

Referring to FIG. 1, the three-dimensional profile of the toecap (US size: 8) was unfolded via the FiberSIM software.

Referring to FIG. 1, the unfolded three-dimensional profile was divided into 10 elemental layers via the FiberSIM software, based on the maximum thickness and minimum thickness (the maximum thickness of the toecap was 8 mm and the minimum thickness was 2.5 mm) of the unfolded three-dimensional profile. Among them, 2 elemental layers having a thickness of 1.025 mm constituted an upper layer, 3 elemental layers having a thickness of 1.025 mm and 3 elemental layers having a thickness of 0.25 mm constituted an intermediate layer, and 2 elemental layers having a thickness of 1.025 mm constituted a lower layer.

Referring to FIG. 2, the composite sheet having a thickness of 1.025 mm was cut by a water cutting machine to obtain 2 composite sheets (201) having the similar shape and size with the area of the toecap having the maximum thickness (8 mm), and 2 composite sheets (203) having the similar shape and size with the top view of the unfolded three-dimensional profile, and 3 composite sheets (202) having the shape and size falling between those of the area having the maximum thickness and those of the top view of the unfolded three-dimensional profile, and scaling down in descending order. Moreover, glass fiber woven fabric reinforced polycarbonate prepreg tapes (prepreg tapes III) having a thickness of 0.25 mm were cut to obtain 3 composite sheets (202) having the shape and size falling between those of the area having the maximum thickness and those of the top view of the unfolded three-dimensional profile, and scaling down in descending order.

Referring to FIG. 2, the 10 cut composite sheets were stacked from large to small to obtain a stack (200).

Referring to FIG. 3, the stack was preheated (FIG. 3-a) by a ceramic infrared heating oven to 240°C, and then preformed manually to obtain a semi-finished product (FIG. 3-b).

Referring to FIG. 3, the semi-finished product was placed in a toecap mold where it was formed by hot-pressing, cooled and demoulded by a 100-ton vertical press and rapid cooling and heating equipment, wherein the hot-pressing temperature was 240 °C, the hot-pressing pressure was 120 bar, the hot pressing time was 30s, and the cooling temperature was 80 °C. The heating was carried out using high-pressure hot water, and the cooling was carried out using high-pressure cold water. Finally, the formed toecap was trimmed by a CNC machine tool to obtain the toecap.

### III. Impact test on the safety shoe toecap

The impact resistance test was performed on the prepared safety shoe toecap with the compressive force of 40001b according to American Standard ASTM F2413. The test results were shown in Table 1.

**Table 1 Toecap forming and test results**

| Examples | Toecap size (US standard) | Toecap weight (g) | Toecap thickness (mm) | Number of layers of composite sheet | Thickness of composite sheet (mm) | Forming results | Test results | | | | |
|---|---|---|---|---|---|---|---|---|---|---|---|
| | | | | | | | Testing standards | Testing conditions | Requirement on Minimum gap * | Actual gap ** | Assessment |
| Example 1 | 8 | 63.55 | 4-8 | 8 | 1.025 | Fully formed | ASTM F2413 | Impact energy: 102J | ≥12.7mm | 22.56 | Qualified |
| Comparative Example 1 | 8 | 61.37 | 4-8 | 5 | 1.025 | Not fully formed | | | | 10.45 | Unqualified |
| Example 2 | 8 | 60.22 | 2.5-8 | 7 | 1.23 or 1.025 | Fully formed | EN12568S | Impact energy: 200J | ≥21mm | 26.42 | Qualified |
| Comparative Example 2 | 8 | 58.48 | 2.5-8 | 5 | 1.025 | Not fully formed | | | | 15.65 | Unqualified |
| Example 3 | 8 | 49.1 | 2.5-8 | 7 | 1.05 or 1.225 | Fully formed | EN12568S | Impact energy: 200J | ≥21mm | 27.76 | Qualified |
| Comparative Example 3 | 8 | 47.43 | 2.5-8 | 5 | 1.05 | Not fully formed | | | | 13.57 | Unqualified |
| Example 4 | 8 | 61.82 | 2.5-8 | 10 | 1.025 or 0.25 | Fully formed | ASTM F2413 | Compressive force: 4000lb | ≥12.7mm | 34.04 | Qualified |

| | | | | | | | | | | | |
|---|---|---|---|---|---|---|---|---|---|---|---|
| *, **: The requirement on minimum gap or actual space in the toecap after impact or compression test is performed according to testing standards | | | | | | | | | | | |

The above disclosure merely describes exemplary embodiments or Examples of the present invention, and is not intended to limit the present invention. For a person skilled in the art, the present invention may be modified or changed in various ways. Any amendment, equivalent substitution, improvement and the like without departing from the spirit and principles of the present invention all fall within the scope of the claims of the present application.

## Claims

1. A method for preparing a three-dimensional shaped article, comprising the following steps:
a) unfolding the three-dimensional profile of the three-dimensional shaped article with a curved surface via a computer-aided design software;
b) dividing the unfolded three-dimensional profile obtained in step a) into several elemental layers via the computer-aided design software;
c) cutting a continuous fiber reinforced thermoplastic resin based composite sheet to have the same or similar shape and size with the elemental layers obtained in step b);
d) stacking the cut composite sheets in order of size to obtain a stack;
e) optionally, pre-laminating the stack obtained in step d) to obtain a pre-laminate;
f) optionally, pre-forming the stack obtained in step d) or the pre-laminate obtained in step e) into a semi-product; and
g) forming the stack obtained in step d), the pre-laminate obtained in step e) or the semi-product obtained in step f), followed by demoulding and optionally trimming to obtain the three-dimensional shaped article.

2. The method according to claim 1, wherein, in step b), the computer-aided design software determines the thickness, shape and size of the elemental layers according to the unfolded three-dimensional profile obtained in step a).

3. The method according to claim 1 or 2, wherein, in step e), the pre-laminating is carried out under heating and pressure, and the pre-laminate is cooled after the pre-laminating.

4. The method according to any of claims 1-3, wherein, in step f), the pre-forming is carried out under heating and pressure.

5. The method according to any of claims 1-4, wherein, in step g), the forming is carried out under heating and pressure.

6. The method according to any of claims 1-5, wherein the continuous fiber reinforced thermoplastic resin based composite sheet is selected from the group consisting of monolayer unidirectional fiber reinforced thermoplastic resin based prepreg tapes, monolayer woven web reinforced thermoplastic resin based prepreg tapes, and laminates thereof.

7. The method according to claim 6, wherein the fiber in the continuous fiber reinforced thermoplastic resin based composite sheet is selected from the group consisting of glass fiber, carbon fiber and aramid fiber.

8. The method according to any of claims 1-7, wherein the thermoplastic resin in the continuous fiber reinforced thermoplastic resin based composite sheet is selected from the group consisting of polypropylene, polyformaldehyde, polyamide, polycarbonate, polyurethane, and a polycarbonate blend, wherein the polycarbonate blend is selected from the group consisting of a blend of polycarbonate and acrylonitrile-butadiene-styrene, a blend of polycarbonate and polyethylene terephthalate and a blend of polycarbonate and polybutylene terephthalate.

9. The method according to any of claims 1-7, wherein the thermoplastic resin in the continuous fiber reinforced thermoplastic resin based composite sheet is a polycarbonate resin, and in step g), the forming is carried out at a temperature ranging from 180°C to 250°C and a pressure ranging from 50 bar to 150 bar.

10. The method according to claim 9, wherein the method comprises step f), and the pre-laminating is carried out at a temperature ranging from 180°C to 250°C and a pressure ranging from 5 bar to 150 bar.

11. The method according to any of claims 1-10, wherein, in step b), dividing the unfolded three-dimensional profile obtained in step a) into several elemental layers via the computer-aided design software, said elemental layers include a upper layer, an intermediate layer and a lower layer.

12. The method according to claim 11, wherein the thickness of the lower layer is the same as the minimum thickness of the unfolded three-dimensional profile.

13. The method according to claim 11 or 12, wherein the total thickness of the upper layer, the intermediate layer and the lower layer is the same as the maximum thickness of the unfolded three-dimensional profile.

14. The method according to any of claims 11-13, wherein the shape and size of the upper layer are the same as those of the area of the unfolded three-dimensional profile with the maximum thickness, respectively.

15. The method according to any of claims 11-14, wherein the shape and size of the lower layer are the same as those of the top view of the unfolded three-dimensional profile, respectively.

16. The method according to any of claims 11-15, wherein the shape and size of the intermediate layer fall between those of the upper layer and those of the lower layer, respectively.

17. A three-dimensional shaped article prepared by the method according to any of claims 1-16.

18. The three-dimensional shaped article according to claim 17, which is selected from toecaps, helmets, knee caps, arc panels or arc blades, and preferably it is a safety shoe toecap.
